Europäisches Patentamt

European Patent Office

Office européen des brevets

(19)

(11) Numéro de publication : **0 610 139 A1**

# (12) DEMANDE DE BREVET EUROPEEN

(21) Numéro de dépôt : **94400237.7**

(22) Date de dépôt : **04.02.94**

(51) Int. Cl.⁵ : $H01L\ 41/09$

(30) Priorité : **05.02.93 FR 9301286**

(43) Date de publication de la demande :
**10.08.94 Bulletin 94/32**

(84) Etats contractants désignés :
**BE CH DE ES GB IT LI NL**

(71) Demandeur : **IMRA EUROPE S.A.**
**220, Rue A. Caquot**
**F-06560 Valbonne (FR)**

(72) Inventeur : **Guyomar, Daniel**
**185, avenue de Fabron**
**F-06200 Nice (FR)**
Inventeur : **Mazoyer, Thierry**
**Le Val Vert,**
**Chemin de la Gaude**
**F-06140 Vence (FR)**
Inventeur : **Sauzade, Jean-Denis**
**Commanderie St Christophe**
**F-06130 Grasse (FR)**
Inventeur : **Ching, Gil**
**60 Chemin du Val Fleuri**
**F-06800 Cagnes sur Mer (FR)**

(74) Mandataire : **Leszczynski, André**
**NONY & ASSOCIES,**
**29, rue Cambacérès**
**F-75008 Paris (FR)**

(54) **Procédé de réalisation d'un circuit de distribution de signaux électriques, circuit de distribution obtenu et moteur piézoélectrique comportant un tel circuit.**

(57)     Procédé de réalisation d'un circuit de distribution de signaux électriques dans un moteur piézoélectrique ou à ondes ultrasonores.

On dépose des électrodes (2) en matériau conducteur sur une face d'un feuillard (1) en matériau diélectrique, on dépose sur l'autre face du feuillard (1) des pistes conductrices (4) suivant un schéma d'interconnexion préalablement conçu pour alimenter les éléments piézoélectriques (3) de manière appropriée, on réalise des perçages (5) traversant le feuillard (1) entre les pistes conductrices (4) et les électrodes (2), et, par métallisation ou dépôt de matière conductrice, on rend ces perçages (5) conducteurs.

FIG 5

Jouve, 18, rue Saint-Denis, 75001 PARIS

EP 0 610 139 A1

La présente invention concerne un procédé de réalisation d'un circuit de distribution de signaux électriques dans un moteur piézoélectrique ou à ondes ultrasonores, un circuit de distribution obtenu par mise en oeuvre de ce procédé, et un moteur piézoélectrique comportant un tel circuit.

Les moteurs à ondes ultrasonores ou piézoélectriques nécessitent l'utilisation d'éléments électrostrictifs ou piézoélectriques qui sont alimentés électriquement, de telle manière qu'ils entrent en vibration en créant un mouvement elliptique en tous points de la surface du corps vibrant ou stator.

Dans un exemple de réalisation connu, pour générer une onde progressive de flexion dans un stator en forme d'anneau ou de disque, on décompose les éléments piézoélectriques en secteurs angulaires représentant une demi-longueur d'onde ($\lambda$/2). Une partie de ces secteurs angulaires est alimentée de manière à générer une onde de flexion de type sinus et l'autre partie, décalée d'un quart de longueur d'onde ($\lambda$/4), est alimentée en cosinus. La combinaison de deux ondes stationnaires décalées de $\pi$/2 dans l'espace (en $\lambda$/4) et de $\pi$/2 dans le temps, permet de générer une onde progressive.

Dans l'exemple cité, on notera qu'il est nécessaire d'alimenter les différents éléments en -sinus, +sinus, -cosinus, +cosinus.

Lors d'empilement d'éléments piézoélectriques alimentés de manière complexe, on utilise le câblage filaire, les éléments étant connectés par des clinquants de cuivre servant d'électrodes et connectés fil à fil via des brasures à l'étain ou des collages par colles électriquement conductrices. Ces connexions sont, en général, fiables mais forcément coûteuses en nombre d'opérations et donc en main d'oeuvre.

De plus, tout procédé de brasure tend à détériorer la polarisation rémanente des éléments piézoélectriques par surchauffe locale. Un intérêt de cette solution est de disposer chacun des éléments piézoélectriques de manière indépendante.

La solution technique la plus satisfaisante actuellement fait appel à un procédé de polarisation rémanente alternée sur la même céramique piézoélectrique. Cette polarisation alternée remplace avantageusement les signaux opposés de type -sinus et -cosinus.

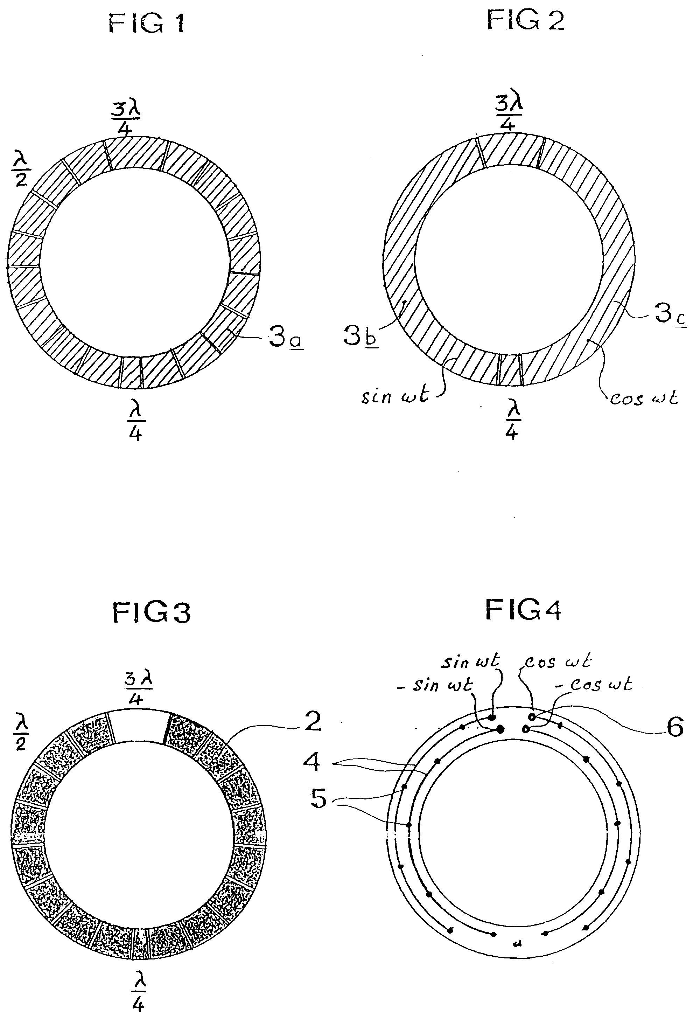

Selon une technique connue représentée à la figure 1, on utilise une céramique monolithique sur laquelle sont gravées des électrodes 3a permettant des polarisations rémanentes alternées de secteurs angulaires distincts.

Une première électrode commune 3b permet d'alimenter une partie des éléments en sinus et une seconde électrode commune 3c permet l'alimentation de l'autre partie en cosinus.

Le retour des signaux s'effectue par une masse commune sur laquelle se connectent l'ensemble des électrodes distinctes.

La simplicité de cette solution lui confère un grand avantage lors de la réalisation en grande série ; la seule opération de câblage étant les connexions en sinus et cosinus des électrodes communes.

Cependant, certaines difficultés apparaissent lors de la mise en oeuvre de cette technique. En particulier, l'opération de polarisation alternée devient quasi impossible lorsqu'on utilise des céramiques à haut rendement électromécanique.

De plus, pour augmenter la puissance des moteurs, il peut être utile de ne pas utiliser une céramique monolithique mais plutôt un ensemble de céramiques sectorisées plus épaisses.

Le procédé et les dispositifs suivant l'invention permettent de remédier aux différents inconvénients des techniques antérieures.

Le procédé suivant l'invention et les dispositifs résultant de sa mise en oeuvre s'appliquent particulièrement aux moteurs piézoélectriques de fortes puissances et les plus compacts possibles.

Ces dispositifs peuvent utiliser le procédé suivant l'invention pour la distribution des signaux mais aussi, selon des modes particuliers de réalisation, pour intégrer de l'électronique de commande ou pour dissiper de la chaleur.

En effet, l'état antérieur de la technique ne semble pas faire apparaître des composants électroniques à l'intérieur du boîtier mécanique du moteur pour des raisons d'encombrement mais aussi de dissipation de la chaleur.

La demande de brevet japonais 89-227880 du 1er Septembre 1989 mentionne un dispositif traditionnel d'évacuation de la chaleur via un système d'ailettes et de caloducs.

La demande de brevet japonais 89-079447 du 30 Mars 1989 décrit un mécanisme permettant d'augmenter la force de contact entre le stator et le rotor pour améliorer la dissipation thermique du rotor lorsque la température croît.

Pour une plus grande clarté de l'explication, la description qui suit concerne l'application du procédé suivant l'invention aux moteurs piézoélectriques annulaires à onde progressive.

Il est évident que le procédé suivant l'invention peut être étendu à tout type de moteurs piézoélectriques, moyennant une adaptation accessible à l'homme de l'art.

La présente invention a pour objet un procédé de réalisation d'un circuit de distribution de signaux électriques dans un moteur piézoélectrique ou à ondes ultrasonores, caractérisé par le fait que l'on dépose des électrodes en matériau conducteur, par exemple en cuivre de 35 $\mu$m d'épaisseur, sur une face d'un feuillard en matériau diélectrique, par exemple du polyimide ou du verre epoxy de 100 $\mu$m d'épaisseur, que l'on dépose sur l'autre face du feuillard, des pistes conductrices suivant un schéma d'interconnexion préalablement conçu pour alimenter les éléments piézoélectriques de manière appropriée, que l'on réalise des perçages traversant le feuillard entre les pistes conductrices et les électrodes, et que, par métallisation ou dépôt de matière conductrice on rend ces perçages conducteurs.

Selon un mode de mise en oeuvre préféré de l'invention, le diamètre des perçages varie entre 0,3 et 0,8 mm.

La présente invention a également pour objet un circuit de distribution de signaux électriques dans un moteur piézoélectrique ou à ondes ultrasonores, obtenu par mise en oeuvre du procédé décrit ci-dessus.

Le circuit d'interconnexion ainsi réalisé est combiné de manière à assurer le bon fonctionnement du moteur piézoélectrique, par exemple en étant relié à l'alimentation en quatre points brasés pour les tensions de type -sinus, +sinus, -cosinus, +cosinus.

Le circuit ainsi constitué est ensuite lié aux éléments piézoélectriques, de préférence par collage en utilisant par exemple une résine époxy sur faible épaisseur, par exemple sur 10μm.

Cette technique permet de constituer des électrodes de géométries et de surfaces variables suivant les besoins et d'utiliser des éléments piézoélectriques soit monolithiques soit fragmentés, préalablement électrodés ou non électrodés.

En particulier, ce procédé permet de générer une onde progressive en utilisant une alimentation multiphasée.

A titre d'exemple, la combinaison de 3 ondes stationnaires déphasées par exemple de $\pi/3$ dans l'espace et dans le temps permet de générer une onde progressive dont le déplacement est du type :

$$u = \frac{3}{2} A \cos (\omega t + n\theta).$$

L'intérêt de ce mode de génération réside dans l'augmentation de puissance d'un facteur 1,5 par rapport au système à deux ondes (tout étant égal par ailleurs).

Un collage approprié nécessite l'utilisation de 6 points de connexion distincts. La masse étant flottante et commune.

Suivant que la sectorisation s'effectue en $(2n+1)\lambda$ ou en $(3n+1)\lambda$, le décalage en espace sera respectivement de $\lambda/6$ ou de $\lambda/3$.

Selon des modes particuliers de réalisation :
- le circuit d'interconnexion peut comporter plusieurs niveaux de pistes conductrices,
- le circuit d'interconnexion peut comporter plusieurs niveaux de masse intercalés entre les pistes et les électrodes,
- le circuit d'interconnexion peut comporter une couche de fermeture pour la protection des pistes et une couche conductrice de type plan de masse pour la protection mutuelle des champs électromagnétiques,
- le circuit d'interconnexion peut comporter un connecteur d'entrée-sortie,
- le circuit d'interconnexion peut comporter une partie ou être directement relié à un circuit imprimé multicouche souple ou rigide assurant la connexion et le placement de composants électroniques permettant d'alimenter, de commander et de contrôler le moteur piézoélectrique,
- le circuit peut comporter un système d'électrodes permettant une alimentation multiphasée, en particulier triphasée,
- le circuit d'interconnexion peut comporter une partie de type membrane ou joint dont une des fonctions est de réaliser un compartiment étanche constitué au moins d'une paroi du stator. Pour réaliser cette fonction de compartimentage, le procédé suivant l'invention peut être étendu à toute membrane ou joint réalisé sous forme de feuillard conducteur ou diélectrique ayant une fonction électrique ou non de faible épaisseur, par exemple 100 μm, et lié au stator ou aux éléments piézoélectriques par collage en utilisant par exemple une résine époxy sur une faible épaisseur par exemple 10 μm. Ce même feuillard est relié de manière étanche à une partie fixe, par exemple le boîtier, pour constituer un compartiment étanche dans lequel on introduit un liquide de refroidissement. Ce liquide de refroidissement doit être inerte chimiquement et compatible avec l'immersion de composants électroniques, il peut transporter les calories soit par conduction-convection, soit par évapo-condensation. Dans ce dernier cas, la température du changement de phase doit être choisie de manière appropriée. On pourra utiliser par exemple des fluides caloporteurs fluorocarbonés de la famille FC de la société 3M.

La présente invention a également pour objet un moteur piézoélectrique ou à ondes ultrasonores comportant un circuit de distribution de signaux électriques du type décrit ci-dessus, assemblé aux éléments piézoélectriques du moteur à l'aide d'une faible épaisseur de colle.

Le dessin annexé illustre un mode de réalisation particulier de l'invention. Dans ce dessin :
- Les figures 1 et 2 représentent respectivement une vue de dessus et une vue de dessous d'un élément piézoélectrique monolithique électrodé suivant une technique antérieure.
- les figures 3 et 4 représentent un exemple de dispositif réalisé par mise en oeuvre du procédé selon l'invention et permettant la distribution de signaux sur un stator annulaire d'un moteur piézoélectrique à onde progressive.
- la figure 5 représente une coupe du même dispositif collé sur le stator.
- la figure 6 illustre un exemple de système d'électrodage décalé en $\lambda/6$ permettant de

combiner trois ondes stationnaires déphasées.
- la figure 7 représente en coupe une variante de
ce dispositif comprenant une électronique intégrée et un compartiment contenant le liquide
de refroidissement du stator, des éléments piézoélectriques et de l'électronique.

En référence au dessin, le dispositif comporte un
feuillard en matériau diélectrique 1 sur lequel sont
gravées des électrodes conductrices 2 aux formes
correspondantes aux surfaces à polariser du matériau piézoélectrique 3.

Sur l'autre surface du feuillard en matériau diélectrique sont gravées des pistes conductrices 4 reliées aux électrodes 2 par des trous d'interconnexion
5 à quatre entrées sous forme de plots à braser 6 qui
sont alimentés par des tensions alternatives respectivement en -sin (wt), + sin (wt), -cos (wt) et +cos (wt).

Ces différentes tensions sont distribuées sur les
électrodes 2 qui polarisent l'élément piézoélectrique
3 à travers un film de colle de manière à générer une
onde progressive au sein du stator 7. La surface du
stator 7 est animée d'un mouvement elliptique qui entraîne par friction un rotor 8 en rotation autour d'un
axe 9. Le rotor 8 entraîne à son tour un arbre 8a dépassant à l'extérieur du moteur et solidaire du rotor 8.

Selon une variante non illustrée, l'élément piézoélectrique 3 peut être fragmenté et constitué de
secteurs dont le nombre est un sous multiple de la
longueur d'onde générée dans le stator 7. Le circuit
d'interconnexion permet d'alimenter de manière appropriée ces différents secteurs et assure leur cohésion avant collage sur le stator 7.

Selon des variantes non illustrées et en fonction
de la complexité et des caractéristiques des moteurs
piézoélectriques à alimenter, le circuit d'interconnexion peut comprendre plusieurs niveaux de pistes
conductrices et plusieurs niveaux de plans de masse
permettant d'une part d'éviter des polarisations néfastes et d'autre part d'éviter des perturbations de types électromagnétiques.

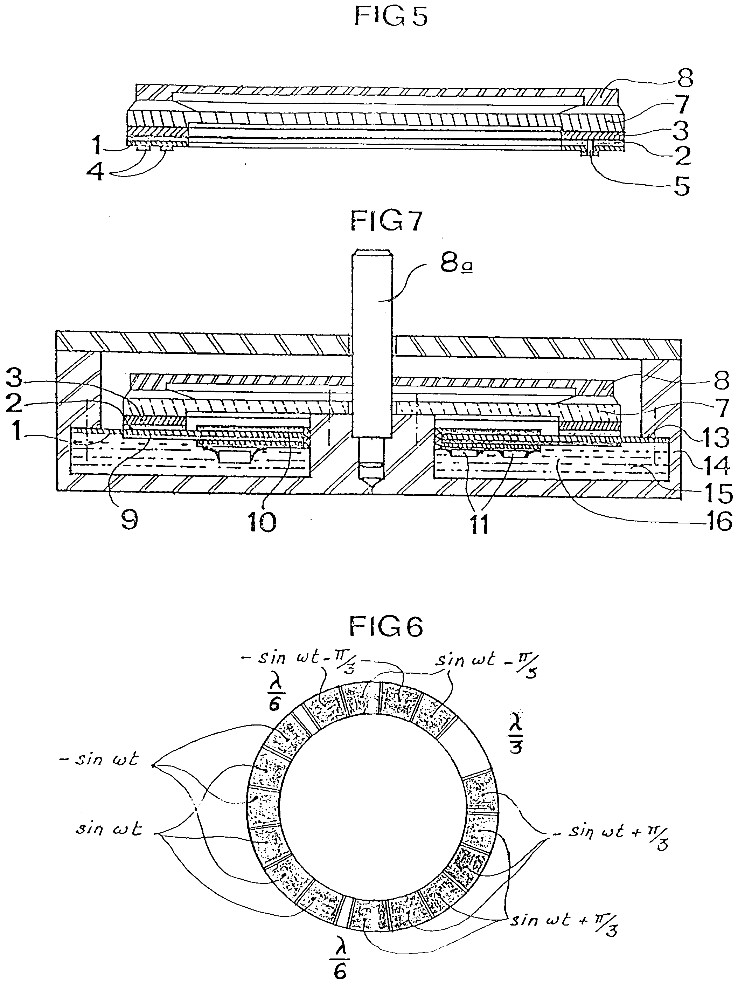

Dans la forme de réalisation de la figure 7, le circuit d'interconnexion 9 de nature flexible est relié par
fabrication à un circuit dit rigide 10 qui contient la
connectique de liaison des composants électroniques 11. Ces composants seront de préférence de
type montage en surface pour réduire l'encombrement. L'électronique ainsi intégrée est alimentée par
un connecteur permettant d'éliminer les opérations
de brasage manuel.

Le circuit d'interconnexion 9 comporte, dans la
forme de réalisation de la figure 6 et à titre d'exemple,
une collerette 13 faisant office de membrane ne perturbant pas la génération de l'onde dans le stator 7.
Cette collerette 13 est fixée mécaniquement au boîtier 14 afin de constituer une cavité étanche 15 contenant un liquide de refroidissement 16.

Par exemple, le liquide de refroidissement peut posséder une température de changement de phase
autour de 50°C. Les éléments qui s'échauffent sont
le stator à travers les pertes par frottement, les éléments piézoélectriques par pertes diélectriques et
les composants électroniques. Ces éléments sont
immergés dans le liquide de refroidissement qui, à
leur contact, s'évapore et se condense sur la partie
du boîtier transportant ainsi une grande quantité de
chaleur à température constante.

Le procédé selon l'invention et les dispositifs en
résultant sont particulièrement adaptés aux moteurs
piézoélectriques dont on veut augmenter la puissance en évitant la polarisation rémanente alternée sur
l'élément piézoélectrique, en fragmentant l'élément
piézoélectrique pour augmenter son épaisseur sans
atteindre la limite à la rupture en flexion et en dissipant une grande quantité de calories vers l'extérieur.
De plus, ce procédé est parfaitement adapté à la réalisation en grande série.

A titre d'exemple non limitatif, le dispositif selon
l'invention sera inclus dans un encombrement de l'ordre de 150 mm de diamètre sur 20 mm de hauteur
pour des moteurs de l'ordre de 30 à 50 W.

Il est bien entendu que le mode de réalisation qui
vient d'être décrit ne présente aucun caractère limitatif et qu'il pourra recevoir toutes modifications désirables sans sortir pour cela du cadre de l'invention.

## Revendications

1 - Procédé de réalisation d'un circuit de distribution de signaux électriques dans un moteur piézoélectrique ou à ondes ultrasonores, caractérisé par le
fait que l'on dépose des électrodes (2) en matériau
conducteur sur une face d'un feuillard (1) en matériau
diélectrique, que l'on dépose sur l'autre face du feuillard (1) des pistes conductrices (4) suivant un schéma
d'interconnexion préalablement conçu pour alimenter
les éléments piézoélectriques (3) de manière appropriée, que l'on réalise des perçages (5) traversant le
feuillard (1) entre les pistes conductrices (4) et les
électrodes (2), et que, par métallisation ou dépôt de
matière conductrice, on rend ces perçages (5)
conducteurs.

2 - Procédé selon la revendication 1, caractérisé
par le fait que l'on réalise quatre pistes conductrices
alimentées respectivement en tension de type -sinus,
+sinus, -cosinus, +cosinus.

3 - Procédé selon l'une quelconque des revendications 1 et 2, caractérisé par le fait que l'on réalise
des perçages dont le diamètre varie entre environ 0,3
mm et environ 0,8 mm.

4 - Circuit de distribution de signaux électriques
dans un moteur piézoélectrique ou à ondes ultrasonores, caractérisé par le fait qu'il est obtenu par mise
en oeuvre du procédé selon l'une quelconque des revendications 1 à 3.

5 - Circuit selon la revendication 4, caractérisé par le fait qu'il comporte quatre pistes conductrices (4) alimentées par des tensions de type respectivement -sinus, +sinus, -cosinus et +cosinus.

6 - Moteur piézoélectrique ou à ondes ultrasonores, caractérisé par le fait qu'il comporte un circuit de distribution de signaux électriques selon l'une quelconque des revendications 4 et 5, assemblé par collage aux éléments piézoélectriques (3) du moteur au moyen d'une faible épaisseur de colle.

7 - Moteur selon la revendication 6, caractérisé par le fait que le circuit d'alimentation est lié aux éléments piézoélectriques (3) à l'aide d'une résine époxy sur faible épaisseur, de préférence sur 10μm.

8 - Moteur selon l'une quelconque des revendications 6 et 7, caractérisé par le fait que l'élément piézoélectrique 3 est fragmenté en plusieurs éléments.

9 - Moteur selon l'une quelconque des revendications 6 à 8, caractérisé par le fait qu'il comporte des composants électroniques (11) disposés sur une partie d'une face du feuillard (1).

10 - Moteur selon l'une quelconque des revendications 6 à 9, caractérisé par le fait qu'il comporte un liquide caloporteur (16) enfermé dans une cavité étanche (15) délimitée notamment par la face inférieure du feuillard (1) tandis qu'une partie du stator (7), les éléments piézoélectriques (3) et les composants électroniques (11) sont immergés dans le liquide caloporteur (16).

## FIG 1

$$\frac{3\lambda}{4}$$

$$\frac{\lambda}{2}$$

$$3\underline{a}$$

$$\frac{\lambda}{4}$$

## FIG 2

$$\frac{3\lambda}{4}$$

$$3\underline{c}$$

$$3\underline{b}$$

$$\sin \omega t$$

$$\cos \omega t$$

$$\frac{\lambda}{4}$$

## FIG 3

$$\frac{3\lambda}{4}$$

$$\frac{\lambda}{2}$$

2

$$\frac{\lambda}{4}$$

## FIG 4

$$\sin \omega t \qquad \cos \omega t$$
$$-\sin \omega t \qquad -\cos \omega t$$

6

4

5

FIG 5

8
7
3
2
1
4
5

FIG 7

8a

3
2
1
8
7
13
14
15
16

9
10
11

FIG 6

$-\sin \omega t - \pi/3$
$\sin \omega t - \pi/3$
$\dfrac{\lambda}{6}$
$\dfrac{\lambda}{3}$
$-\sin \omega t$
$\sin \omega t$
$-\sin \omega t + \pi/3$
$\sin \omega t + \pi/3$
$\dfrac{\lambda}{6}$

**Office européen des brevets**

# RAPPORT DE RECHERCHE EUROPEENNE

Numero de la demande
EP 94 40 0237

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | EP-A-0 365 231 (SEIKO INSTRUMENTS INC.) * abrégé; figure 1 * ----- | 1 | H01L41/09 |

DOMAINES TECHNIQUES RECHERCHES (Int.Cl.5)

H01L

Le présent rapport a été établi pour toutes les revendications

| Lieu de la recherche | Date d'achèvement de la recherche | Examinateur |
|---|---|---|
| LA HAYE | 30 Mai 1994 | Pelsers, L |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

8